# EUROPEAN PATENT SPECIFICATION

(11) **EP 0 778 744 B1**
(45) Date of publication and mention of the grant of the patent: **16.06.1999**
(21) Application number: 95931955.9
(22) Date of filing: 31.08.1995
(51) Int. Cl.: A47J 27/022

(54) **A BOTTOM FOR FRYING PANS AND THE LIKE, PARTICULARLY WHERE INTENDED FOR HEATING ON A GLASS-CERAMICS SURFACE OR BY MAGNETIC INDUCTION**
BODEN FÜR BRATPFANNEN ODER DERGLEICHEN, INSBESONDERE FÜR DIE, DIE AUF EINER GLAS-KERAMISCHEN PLATTE ODER DURCH MAGNETISCHE INDUKTION BEHEIZT WERDEN SOLLEN
FOND POUR POELES A FRIRE ET ANALOGUE, DESTINE NOTAMMENT A LA CUISSON SUR UNE SURFACE VITROCERAMIQUE OU PAR INDUCTION MAGNETIQUE

(30) Priority: 01.09.1994 IT MI941807
(43) Date of publication of application: 18.06.1997
(73) Proprietor: LUMENFLON S.R.L., 25060 Ponte Zanano di Sarezzo (IT)
(72) Inventor: PRANDELLI, Vigilio, I-25062 Concesio (IT)
(74) Representative: De Nova, Roberto
(86) International application number: EP9503428
(87) International publication number: WO9606552

(56) References cited:
- EP-A- 0 342 338
- EP-A- 0 451 033
- EP-A- 0 534 202
- WO-A-94/01030
- DE-A- 3 713 660
- DE-A- 4 000 536
- DE-U- 9 320 248

## Description

This invention relates to a bottom for frying pans and the like, according to the preamble of Claim 1 (see EP-A-534202).

As is known, in addition to traditional domestic cooking methods such as by gas flames or electric hot plates, respectively baking in electric or gas ovens, other cooking methods -- such as heating on a surface of glass-ceramics or by magnetic induction -- have currently become popular which afford significant savings in energy, shorter food cooking times than the traditional methods, and improved safety during the cooking process.

In particular, cooking on a glass-ceramics surface requires that pots and pans with steel bottoms be used, in order to prevent the heated bottoms of the cooking ware from being fused to the glass-ceramics surface.

Cooking or warming up by magnetic induction is carried out by placing food ingredients into such vessels as pots, pans, or kettles, made of metal materials adapted to become heated when swept by electromagnetic waves generated at a suitable frequency by a special plate of the induction cooking range which is also functioning as a rest surface for the vessel.

One material well adapted for heating by magnetic induction is stainless steel. However, this material is less than ideal for making kitchen ware for food cooking because it is a poor heat conductor.

Unfortunately, aluminum, which would be the most suitable material for such ware on account of its excellent thermal conduction properties, is insensitive to heating by magnetic induction. Accordingly, it is unsuitable for making kitchen ware to be used in cooking food by magnetic induction.

To obviate such drawbacks, it has been common practice heretofore to attach, as by welding or adhesively to the rest bottom surface of aluminum kitchen ware, sensitive sheets to heating by magnetic induction, such as sheets of stainless steel. Heat is transferred to the aluminum portions of the kitchen ware from these sheets by conduction.

However, the application of these steel sheets is complicated and expensive, and has certain drawbacks, of which the most important originates from the sheets being alien from the bottom material. After a period of use, this unavoidably results in delamination of the sheets due to the different rates of thermal expansion of the aluminum bottom and the stainless steel sheets under heat application. This difference in expansion rate subjects the welded or glued spots to powerful mechanical stresses that impair their integrity over time.

The underlying technical problem of this invention is to provide a bottom construction for pans and the like; particularly where intended for heating on a glass-ceramics surface or by magnetic induction, which can overcome the aforementioned drawbacks of the prior art.

This problem is solved by a bottom for frying pans and the like, according to Claim 1.

Further features and the advantages of the bottom according to the invention will be apparent from the following detailed description of a preferred embodiment thereof, given by way of example and not of limitation with reference to the accompanying drawings, in which:

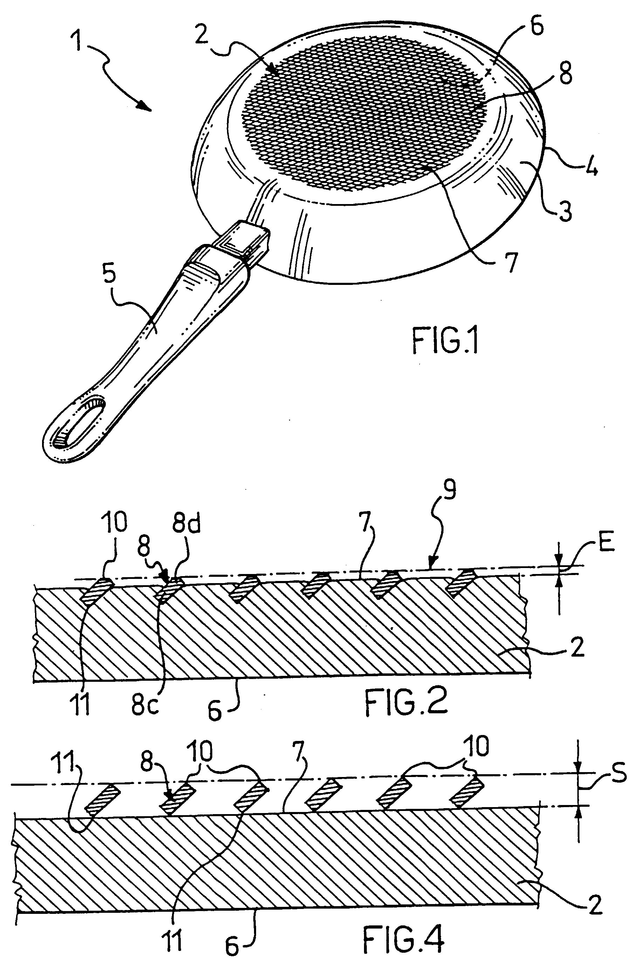

Figure 1 is a perspective view of a frying pan incorporating a bottom according to the invention;
Figure 2 is a sectional view of a detail of the bottom shown in Figure 1;

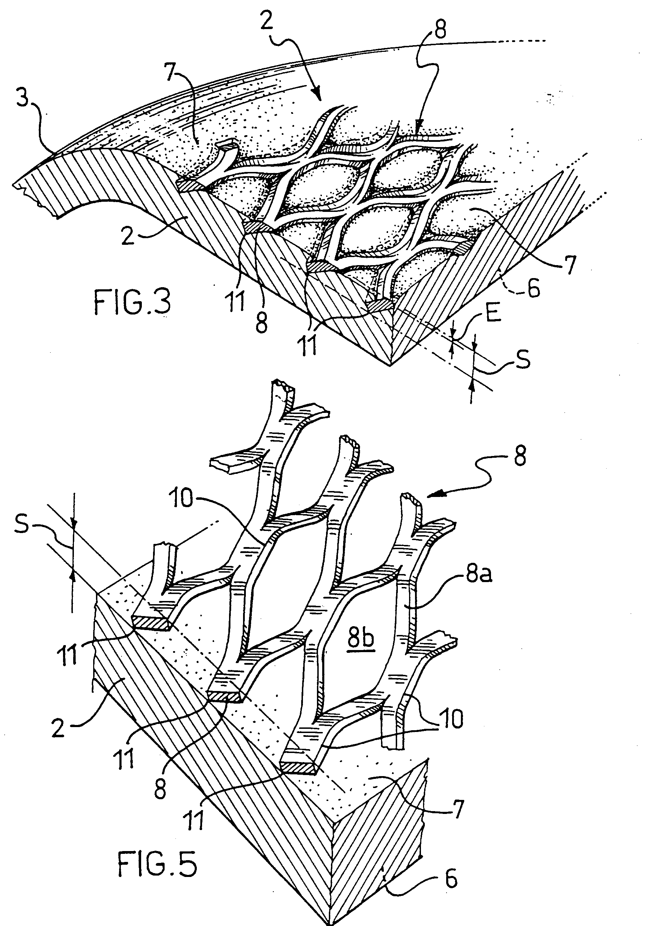

Figure 3 is a cutaway perspective view of the bottom shown in Figure 1;
Figure 4 is a sectional view of a detail of the bottom in Figure 1 at one stage of its making; and
Figure 5 is a cutaway perspective view of the bottom in Figure 1 at another stage of its making.

With reference to the above drawing views, generally shown at 1 is a frying pan of aluminum construction.

The pan 1 has a bottom 2 for cooking and warming up food products by magnetic induction.

The pan 1 is formed, upwards from its bottom 2, with a raised edge 3 bordered by a rim 4 and defining, with the bottom 2, a vessel adapted to contain food products for cooking. A handle 5 extends from the edge 3 for convenience in holding the pan 1.

The bottom 2 has a non-sticking inward surface 6 intended to be in contact with the food, and an outward surface 7.

The bottom 2 includes a mesh 8 of stretched sheet metal having a thickness S and capable of becoming heated, when swept by electromagnetic waves generated by a special plate of an induction cooking range onto which the skillet 1 would be laid for cooking the food.

The mesh 8 of stretched sheet metal is formed from a steel which contains chromium in a by-weight amount which varies between 15% and 25%, preferably of 18%.

The mesh 8 has links, indicated at 8a, which define voids, indicated at 8b.

A major portion 8c of the mesh 8 is embedded by pressing in the bottom 2 from the outward surface 7, the remainder of the mesh being left proud of the surface 7. The thickness of the portion 8d protruding out of the surface 7 is denoted by E and takes a value in the 0.05 mm to 0.2 mm range, being preferably equal to 0.1 mm.

The portion 8d serves as a rest surface 9 of the bottom 2.

The greater hardness of steel compared to aluminum allows the mesh 8 to be driven into the bottom 2 without difficulty, and without its links being broken or strained in the process. Furthermore, the mesh 8 of stretched sheet metal, depicted in Figures 4 and 5 as before being embedded in the bottom 2 of the pan 1, has sharp opposite edges 10 and 11. The sharp edges 11 act knife-like to facilitate the penetration of the mesh 8 into the bottom 2 during the pressing operation and promote its grip in the material.

The sharp edges 10 advantageously leave the pressing step, whereby the mesh 8 is embedded in the bottom 2, in a blunted form to produce the aforementioned rest surface 9 of the bottom 2.

Accordingly, the links 8a of the mesh 8 will be held captively within the bottom 2 to form a unitary construction therewith.

The integration of the stretched sheet metal mesh to the pan bottom provided by the pressing operation represents a major advantage of this invention, since delamination of the mesh from the bottom can thus be prevented, even after prolonged use.

Another advantage of the invention comes from its simple implementation and economical construction, considering that it can be practiced from parts, such as the mesh 8 of stretched sheet metal, which are readily available commercially at a low price.

A further advantage is that the rest surface provided by the mesh of stretched sheet metal would not become deteriorated by rubbing contact, not even after prolonged use.

Many changes may be made by the skilled one unto the bottom for pans and the like according to the invention in order to meet individual and contingent demands, without departing from the protection scope of the invention as defined in the following claims.

## Claims

1. A bottom for frying pans and the like, particularly where intended for heating on a glass-ceramics surface or by magnetic induction, having an inward surface (6), an outward surface (7) and a mesh embedded by pressing in the thickness of said bottom (2) through said outward surface (7), characterized in that said mesh is a mesh (8) of stretched sheet metal.

2. A bottom according to Claim 1, characterized in that said mesh (8) of stretched sheet metal stands proud of the outward surface (7) of the bottom (2).

3. A bottom according to Claim 2, characterized in that said mesh (8) of stretched sheet metal protrudes from the bottom (2) by an amount within the range of 0.05 mm to 0.2 mm, preferably by 0.1 mm.

4. A bottom according to Claim 1, characterized in that it is made of aluminum.

5. A bottom according to Claim 1, characterized in that said mesh (8) of stretched sheet metal is made of a steel containing chromium.

6. A bottom according to Claim 5, characterized in that said steel contains chromium in an amount between 15% and 25% by weight, preferably of 18% by weight.

## Patentansprüche

1. Boden für Bratpfannen oder dergleichen, insbesondere zum Beheizen auf Glaskeramikplatten oder durch magnetische Induktion, der eine Innenfläche (6), Außenfläche (7) und eine Gittereinlage, die durch Eindrücken in die Dicke des genannten Bodens (2) durch die genannte Außenfläche (7) hindurch eingebettet wird, besteht,
**dadurch gekennzeichnet, daß** diese Gittereinlage eine Streckmetallblech-Gitterweinlage (8) ist.

2. Boden nach Anspruch 1, **dadurch gekennzeichnet, daß** diese Streckmetallblech-Gittereinlage (8) aus der Außenfläche (7) des Bodens (2) hervorsteht.

3. Boden nach Anspruch 2, **dadurch gekennzeichnet, daß** diese Streckmetallblech-Gittereinlage (8) von dem Boden (2) in einem Ausmaß von 0,05 mm bis 0,2 mm, vorzugsweise um 0,1 mm hervorsteht.

4. Boden nach Anspruch 1, **dadurch gekennzeichnet, daß** er aus Aluminium hergestellt ist.

5. Boden nach Anspruch 1, **dadurch gekennzeichnet, daß** diese Streckmetallblech-Gittereinlage (8) aus chromhaltigem Stahl hergestellt ist.

6. Boden nach Anspruch 5, **dadurch gekennzeichnet, daß** der genannte Stahl eimen Chromgehalt in einer Höhe von 15% bis 25% Gewichtsanteilen hat, vorzugsweise von 18% Gewichtsanteilen.

## Revendications

1. Fond pour poêle à frire et analogues, prévu en particulier pour un chauffage sur une surface en vitro-céramique ou par induction magnétique, ayant une surface intérieure (6), une surface extérieure (7) et une grille encastrée par pression dans l'épaisseur dudit fond (2) à travers ladite surface extérieure (7), caractérisé en ce que ladite grille est une grille (8) formée d'une feuille de métal déployée.

2. Fond selon la revendication 1, caractérisé en ce que ladite grille (8) constituée d'une feuille de métal déployée fait saillie de la surface extérieure (7) du fond (2).

3. Fond selon la revendication 2, caractérisé en ce que ladite grille (8) formée d'une feuille de métal déployée fait saillie du fond (2) d'une valeur comprise dans la plage de 0,05 mm à 0,2 mm, avantageusement de 0,1 mm.

4. Fond selon la revendication 1, caractérisé en ce qu'il est constitué d'aluminium.

5. Fond selon la revendication 1, caractérisé en ce que ladite grille (8) constituée d'une feuille de métal déployée est formée d'un acier contenant du chrome.

6. Fond selon la revendication 5, caractérisé en ce que ledit acier contient du chrome en quantité comprise entre 15 % et 25 % en poids, avantageusement de 18 % en poids.
